# EUROPEAN PATENT APPLICATION

(11) **EP 4 379 221 A1**
(43) Date of publication of application: **05.06.2024**
(21) Application number: 23211916.4
(22) Date of filing: 24.11.2023
(51) Int. Cl.: F15B 13/044, F15B 15/14, F15B 15/20, F15B 13/04

(54) **POWER CYLINDER WITH EMBEDDED SOLENOID VALVE**

(30) Priority: 30.11.2022 TW 111145872
(71) Applicant: CHEN SOUND INDUSTRIAL CO., LTD., Taichung City 429 (TW)
(72) Inventor: SUN, Ying, Taichung City 429 (TW)
(74) Representative: Patentwerk B.V.

(57) **Abstract**

A power cylinder with embedded solenoid valve includes a cylinder body (10) having a chamber (13), a piston assembly (20) in the chamber (13), a top cover (30) and a bottom cover (40) on two ends of the cylinder body (10), and a solenoid valve (50) disposed on the top cover (30). The top cover (30) includes an inlet (31), two outlets (32), a movement bore (33), a first passage (34), and a second passage (35). The inlet (31) and the two outlets (32) are connected with the movement bore (33), allowing a fluid (F) to enter the chamber (13). The bottom cover (40) includes a third passage (41) connected with the first passage (34) and the chamber (13). A valve stem (52) of the solenoid valve (50) is disposed in the movement bore (33), reciprocating between a first and a second position for the fluid (F) to push the piston assembly (20) toward or away from the top cover (30). Thus, the solenoid valve (50) and the power cylinder are integrated.

## Description

### BACKGROUND OF THE INVENTION

### 1. Field of the Invention:

The present invention relates to power cylinder structures, and more particularly, to a power cylinder with embedded solenoid valve which is able to effectively maintain the overall volume during usage.

### 2. Description of the Related Art:

A conventional fluid pressure cylinder comprises a cylinder barrel, a piston movably contained in the cylinder barrel, and a piston shaft connecting the piston. Therein, during the actual operation, the conventional fluid pressure cylinder switches the supply and discharge of the pressurized fluid into or out of the cylinder chamber of the cylinder barrel through the operation of a solenoid valve, and the pressurized fluid accordingly controls the reciprocation of the piston and the piston shaft. However, the base of the solenoid valve has to be attached to the surface (lateral side) of the cylinder barrel. Because the solenoid valve and other elements are attached to the surface of the cylinder barrel, the overall volume of the fluid pressure cylinder in actual use is significantly larger than the volume of it in the product form. Therefore, it is difficult for the user to know the needed installation space and the positional relationship of the fluid pressure cylinder with respect to other devices in advance, causing an inconvenience of usage.

Also, because the solenoid valve and the fluid pressure cylinder are two independent structures, when in use, the installation of the solenoid valve onto the fluid pressure cylinder usually takes a certain amount of time, causing an inconvenience of usage as well.

### SUMMARY OF THE INVENTION

To improve the issues above, the present invention discloses a power cylinder with embedded solenoid valve. The solenoid valve is combined with the top cover of the power cylinder to maintain the overall volume during usage, thereby allowing the user to effectively arrange the installation space and improving the convenience of usage.

For achieving the aforementioned objectives, an embodiment of the present invention provides a power cylinder with embedded solenoid valve, comprising:
a cylinder body having a first end and an opposite second end, the cylinder body also comprising a chamber therein;
a piston assembly movably disposed in the chamber of the cylinder body;
a top cover disposed on the first end of the cylinder body, the top cover having an inlet, two outlets, a movement bore, a first passage, and a second passage, the inlet and the two outlets being in communication with the movement bore, so that a fluid enters the chamber through the inlet, wherein a plurality of operation channels are concavely disposed at intervals on a periphery of an inner diameter of the movement bore, and the operation channels are in positional alignment and communication with the inlet, the two outlets, the first passage, and the second passage, respectively, and the second passage is in communication with the chamber;
a bottom cover disposed on the second end of the cylinder body, the bottom cover comprising a third passage in communication with the first passage and the chamber; and
a solenoid valve disposed on the top cover, the solenoid valve comprising an electronic control unit and a valve stem, the valve stem movably disposed in the movement bore, the electronic control unit controlling the valve stem to reciprocate between a first position and a second position, wherein when the electronic control unit controls the valve stem to be located at the first position, the inlet is in communication with two of the operation channels, the first passage, the third passage, and the chamber, and the fluid pushes the piston assembly toward the top cover; when the electronic control unit controls the valve stem to move to the second position, the inlet is in communication with other two of the operation channels, the second passage, and the chamber, and one of the two outlets is in communication with another one of the operation channels, the first passage, the third passage, and the chamber, and the fluid pushes the piston assembly away from the top cover, and the fluid originally located in the chamber is outputted from the outlet through the third passage and the first passage.

With such configuration, the solenoid valve is combined with the top cover, so that the solenoid valve does not need to be independently installed. Therefore, the volume of the power cylinder is not increased, allowing the user to effectively arrange the installation space.

Also, the power cylinder of the present invention is structurally simple, saving the need of additional time for installing the solenoid valve during actual use, thereby reducing the inconvenience of usage.

### BRIEF DESCRIPTION OF THE DRAWINGS

**Fig. 1** is a perspective view of the present invention.
**Fig. 2** is a cross-sectional view taken along line 2-2 in **Fig. 1****.**
**Fig. 3** is a cross-sectional view taken along line 3-3 in **Fig. 1****,** illustrating the valve stem at the first position.
**Fig. 4** is a cross-sectional view taken along line 4-4 in **Fig. 1****,** illustrating the valve stem at the first position.
**Fig. 5** is a cross-sectional view taken along line 5-5 in **Fig. 1****,** illustrating the valve stem at the first position.
**Fig. 6** is a schematic view of the present invention, illustrating the valve stem at the second position.
**Fig. 7** is another schematic view of the present invention, illustrating the valve stem at the second position.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

The directional terms of, for example, "up", "down", "front", "rear", "left", "right", "inner", "outer", and "side" are only used herein for illustrating the relative directions shown in the drawings. Therefore, the directional terms are applied for the purpose of illustration and understanding of the present invention, instead of limiting the present invention.

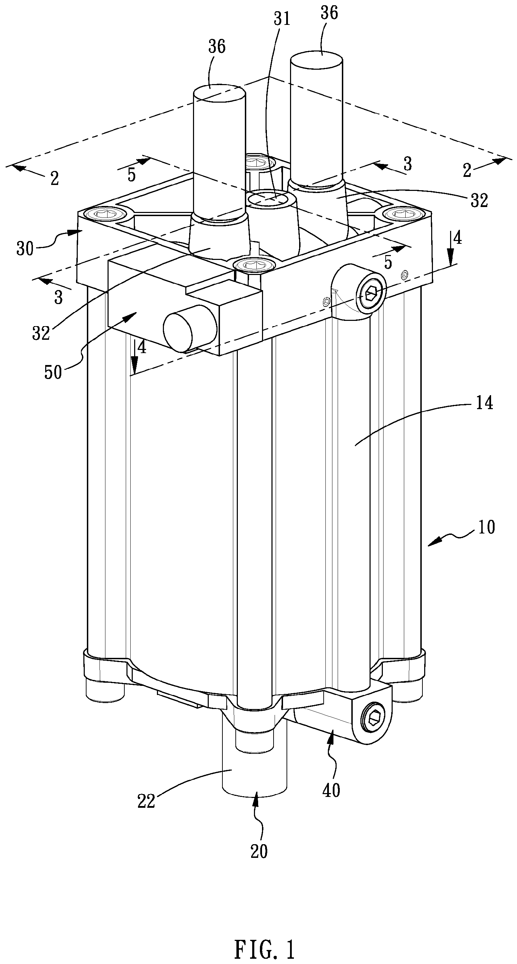

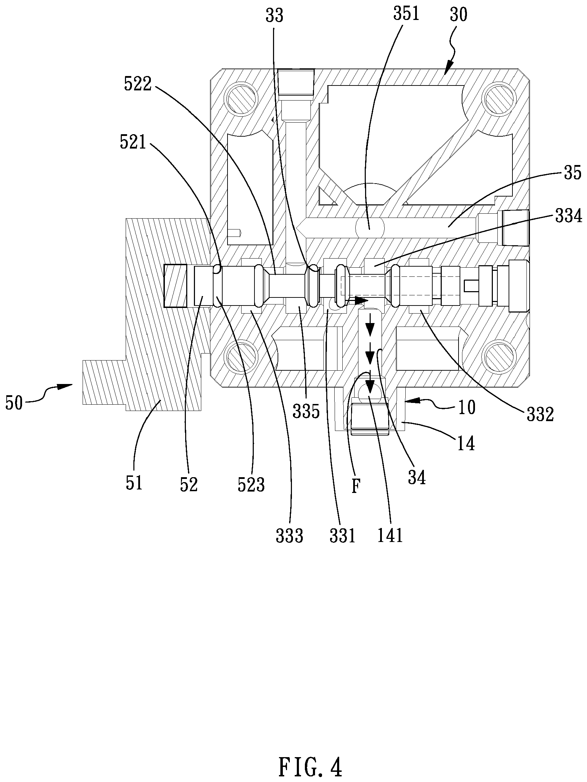

Referring to **Fig. 1** to **Fig. 7****,** the present invention provides a power cylinder with embedded solenoid valve, comprising a cylinder body **10,** a piston assembly **20,** a top cover **30,** a bottom cover **40,** and a solenoid valve **50.**

The cylinder body **10** comprises a first end **11,** an opposite second end **12,** and a chamber **13** disposed inside the cylinder body **10.** Therein, the cylinder body **10** comprises a housing part **14** convexly disposed on an outer lateral side thereof.

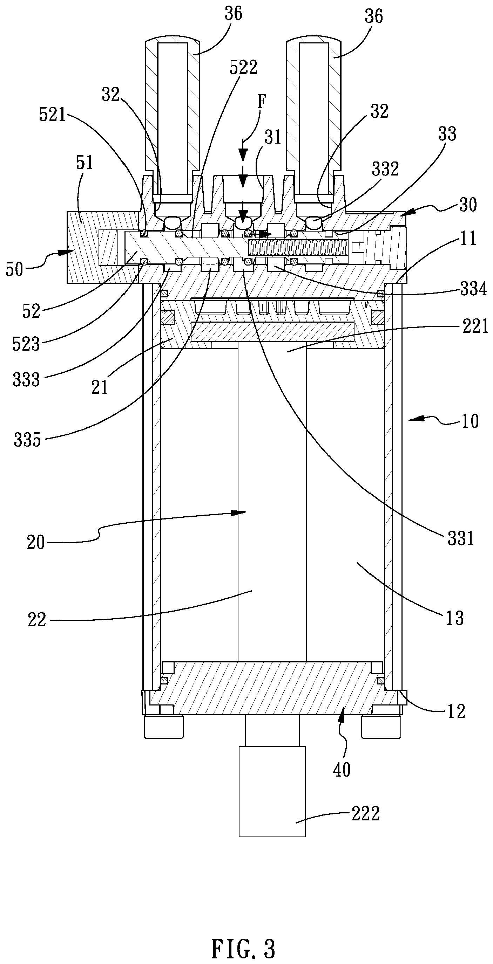

The housing part **14** comprises a flow channel **141** passing therethrough, as shown by **Fig. 1** and **Fig. 3****.**

The piston assembly **20** is movably disposed in the chamber **13** of the cylinder body **10.** The piston assembly **20** comprises a piston **21** and a shaft body **22.** The shaft body **22** comprises a first connection end **221** and an opposite second connection end **222.** The piston **21** is disposed in adjacent to the first end **11** of the cylinder body **10.** Therein, one side of the piston **21** is connected with the first connection end **221** of the shaft body **22.** The second connection end **222** of the shaft body **22** protrudes out of the second end **12** of the cylinder body **10.**

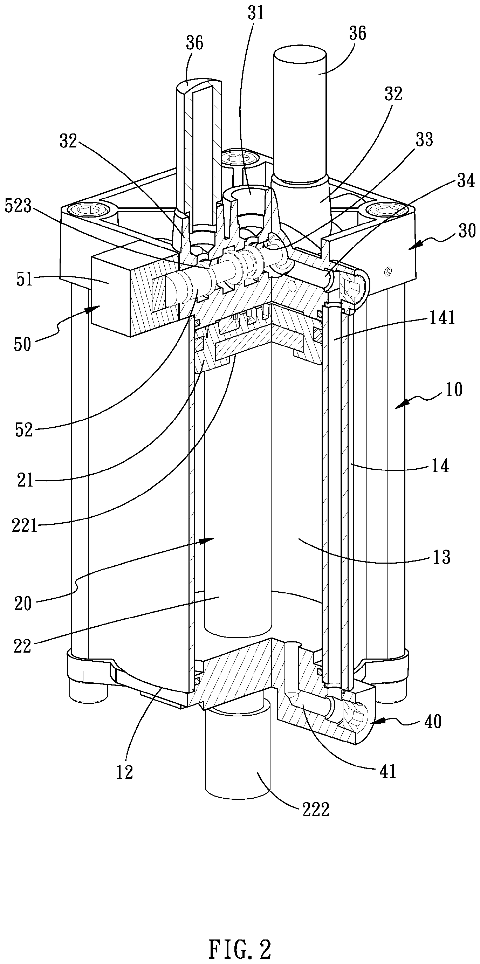

The top cover **30** is disposed on the first end **11** of the cylinder body **10.** The top cover **30** comprises an inlet **31,** two outlets **32,** a movement bore **33,** a first passage **34,** and a second passage **35.** The inlet **31** and the two outlets **32** are in communication with the movement bore **33,** respectively. A fluid **F** enters the chamber **13** through the inlet **31.** In the embodiment, the fluid **F** is a gas. The inlet **31** and the two outlets **32** convexly disposed on the top part of the top cover **30** at intervals, and the inlet **31** is arranged between the two outlets **32.** The movement bore **33,** the first passage **34,** and the second passage **35** are disposed between the top part and the bottom part of the top cover **30.** The flow channel **141** is in communication with the first passage **34,** and the first passage **34** is not in direct communication with the chamber **13.** A through hole **351** passes through the second passage **35** to be in communication with the chamber **13,** as shown by **Fig. 2****,** **Fig. 5****,** and **Fig. 7****.**

A plurality of operation channels are concavely disposed at intervals on a periphery of an inner diameter of the movement bore **33,** and in positional alignment and communication with the inlet **31,** the two outlets **32,** the first passage **34,** and the second passage **35.** Therein, the operation channels include an input channel **331,** a first discharge channel **332,** a second discharge channel **333,** a first communication channel **334,** and a second communication channel **335,** wherein the input channel **331** is in communication with the inlet **31,** the first discharge channel **332** and the second discharge channel **333** are in communication with the two outlets **32,** respectively, the first communication channel **334** is in communication with the first passage **34,** the second communication channel **335** is in communication with the second passage **35,** the input channel **331** is disposed between the first communication channel **334** and the second communication channel **335,** the first communication channel **334** is disposed between the input channel **331** and the first discharge channel **332,** and the second communication channel **335** is disposed between the input channel **331** and the second discharge channel **333,** as shown by **Fig. 3****.**

Also, one end of the two outlets **32** are in communication with a silencer **36,** respectively, such that the two silencers **36** provide sound reducing effects when the fluid **F** is being discharged, as shown by **Fig. 1****.**

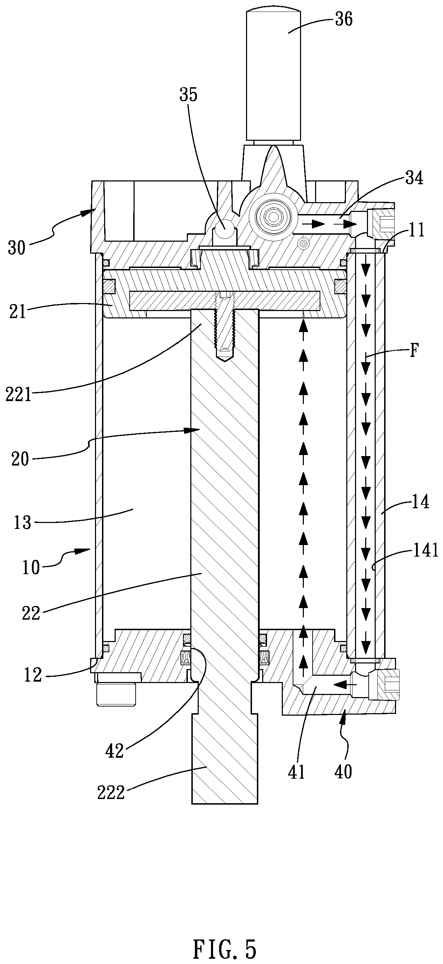

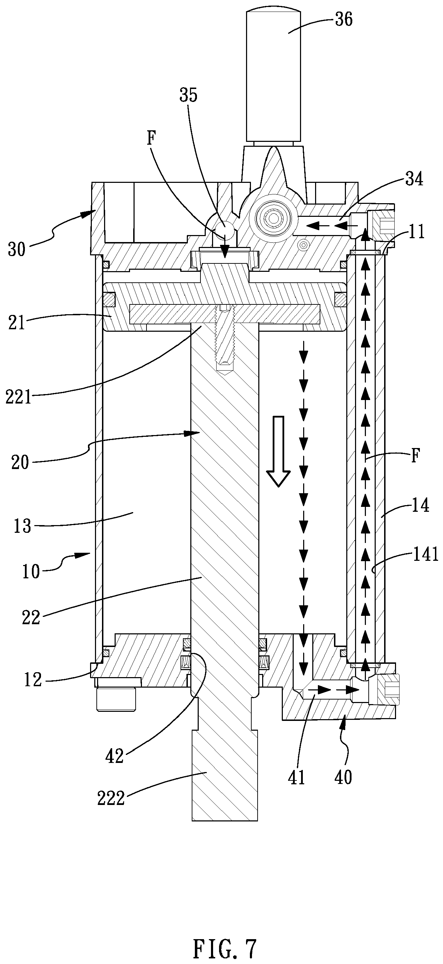

The bottom cover **40** is disposed on the second end **12** of the cylinder body **10.** The bottom cover **40** comprises a third passage **41.** The flow channel **141** is in communication with the first passage **34** and the third passage **41.** The third passage **41** is in communication with the flow channel **141** and the chamber **13.** Therein, a cylinder bore **42** passes through the bottom cover **40** to be in communication with the chamber **13.** The second connection end **222** of the shaft body **22** is allowed to protrude out from the cylinder bore **42** of the bottom cover **40,** as shown by **Fig. 5** and **Fig. 7****.**

The solenoid valve **50** is disposed on the top cover **30** and comprises an electronic control unit **51** and a valve stem **52.** The electronic control unit **51** is connected with the outer periphery of the top cover **30.** The valve stem **52** is movably disposed in the movement bore **33.** The electronic control unit **51** controls the valve stem **52** to reciprocate between a first position and a second position. In the embodiment, the solenoid valve **50** is a pneumatic solenoid valve.

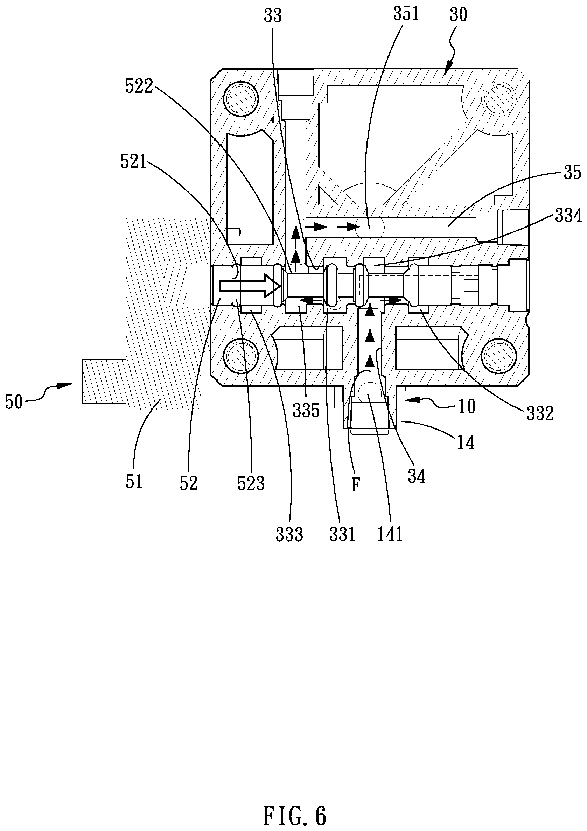

A plurality of grooves **521** and a plurality of through grooves **522** are concavely disposed on the outer periphery of the valve stem **52** at intervals, wherein grooves **521** are arranged on two sides of each through groove **522** at intervals, and each groove **521** is mounted with a seal ring **523.** In the embodiment, five grooves **521** and three through grooves **522** are included. The through grooves **522** are disposed at the middle section of the valve stem **52** at intervals, and the depth of each through groove **522** is larger than the depth of each groove **521,** as shown by **Fig. 3** and **Fig. 6****.**

Referring to **Fig. 3** to **Fig. 5****,** when the electronic control unit **51** controls the valve stem **52** to be located at the first position, the inlet **31** is in communication with one of the through grooves **522,** the input channel **331,** the first communication channel **334,** the first passage **34,** the third passage **41,** and the chamber **13.** The fluid **F** enters the input channel **331** in the movement bore **33** through the inlet **31.** Because one side of the input channel **331** is blocked by the seal ring **523** mounted around the valve stem **52,** the fluid **F** is prevented from flowing toward the second discharge channel **333,** and therefore flows to the first communication channel **334** to the first passage **34.** The fluid **F** flows through the first passage **34** to the third passage **41** and enters the chamber **13,** so as to push the piston assembly **20** toward the top cover **30.**

Referring to **Fig. 6** to **Fig. 7****,** when the electronic control unit **51** controls the valve stem **52** to move to the second position, the inlet **31** is in communication with two of the through grooves **522,** the input channel **331,** the second communication channel **335,** the second passage **35,** and the chamber **13.** The fluid **F** flows to the input channel **331** in the movement bore **33** through the inlet **31.** Because another side of the input channel **331** is blocked by the seal ring **523** mounted around the valve stem **52,** the fluid **F** flows to the second communication channel **335** to the second passage **35.** The fluid **F** enters the chamber **13** through the through hole **351** of the second passage **35,** so as to push the piston assembly **20** away from the top cover **30,** and the fluid **F** originally in the chamber **13** enters the first discharge channel **332** through the third passage **41** and the first passage **34,** such that the fluid **F** is outputted from the outlet **32.**

With the foregoing configuration, the present invention achieves following effects. With the solenoid valve **50** combined with the top cover **30,** the solenoid valve **50** does not need to be independently installed during actual usage, and the volume of the power cylinder is not increased, allowing the user to arrange the proper installation space.

The power cylinder of the present invention is structurally simple, saving the need of additional time for installing the solenoid valve **50,** thereby reducing the inconvenience of usage

Although particular embodiments of the invention have been described in detail for purposes of illustration, various modifications and enhancements may be made without departing from the scope of the invention. Accordingly, the invention is not to be limited except as by the appended claims.

## Claims

1. A power cylinder with embedded solenoid valve, comprising:
a cylinder body (10) having a first end (11) and an opposite second end (12), the cylinder body (10) comprising a chamber (13) therein;
a piston assembly (20) movably disposed in the chamber (13) of the cylinder body (10);
a top cover (30) disposed on the first end (11) of the cylinder body (10), the top cover (30) having an inlet (31), two outlets (32), a movement bore (33), a first passage (34), and a second passage (35), the inlet (31) and the two outlets (32) being in communication with the movement bore (33), respectively, so that a fluid (F) enters the chamber (13) through the inlet (31), wherein a plurality of operation channels are concavely disposed at intervals on a periphery of an inner diameter of the movement bore (33), the operation channels are in positional alignment and communication with the inlet (31), the two outlets (32), the first passage (34), and the second passage (35), respectively, and the second passage (35) is in communication with the chamber (13);
a bottom cover (40) disposed on the second end (12) of the cylinder body (10), the bottom cover (40) comprising a third passage (41) in communication with the first passage (34) and the chamber (13); and
a solenoid valve (50) disposed on the top cover (30), the solenoid valve (50) comprising an electronic control unit (51) and a valve stem (52), the valve stem (52) disposed in the movement bore (33), the electronic control unit (51) controlling the valve stem (52) to reciprocate between a first position and a second position, wherein when the electronic control unit (51) controls the valve stem (52) to be located at the first position, the inlet (31) is in communication with two of the operation channels, the first passage (34), the third passage (41), and the chamber (13), and the fluid (F) pushes the piston assembly (20) toward the top cover (30);
when the electronic control unit (51) controls the valve stem (52) to move to the second position, the inlet (31) is in communication with other two of the operation channels, the second passage (35), and the chamber (13), and one of the two outlets (32) is in communication with another one of the operation channels, the first passage (34), the third passage (41), and the chamber (13), and the fluid (F) pushes the piston assembly (20) away from the top cover (30), and the fluid (F) originally located in the chamber (13) is outputted from one of the two outlets (32) through the third passage (41) and the first passage (34).

2. The power cylinder with embedded solenoid valve of claim 1, wherein the operation channels include an input channel (331), a first discharge channel (332), a second discharge channel (333), a first communication channel (334), and a second communication channel (335); the input channel (331) is in communication with the inlet (31), the first discharge channel (332) and the second discharge channel (333) are in communication with the two outlets (32), respectively, the first communication channel (334) is in communication with the first passage (34), and the second communication channel (335) is in communication with the second passage (35).

3. The power cylinder with embedded solenoid valve of claim 2, wherein the input channel (331) is disposed between the first communication channel (334) and the second communication channel (335), the first communication channel (334) is disposed between the input channel (331) and the first discharge channel (332), and the second communication channel (335) is disposed between the input channel (331) and the second discharge channel (333).

4. The power cylinder with embedded solenoid valve of claim 3, wherein when the electronic control unit (51) controls the valve stem (52) to be located at the first position, the inlet (31) is in communication with the input channel (331), the first communication channel (334), the first passage (34), the third passage (41), and the chamber (13).

5. The power cylinder with embedded solenoid valve of claim 4, wherein when the electronic control unit (51) controls the valve stem (52) to be located at the second position, the inlet (31) is in communication with the input channel (331), the second communication channel (335), the second passage (35), and the chamber (13); one of the outlets (32) is in communication with the first discharge channel (332), the first passage (34), the third passage (41), and the chamber (13).

6. The power cylinder with embedded solenoid valve of claim 1, wherein the cylinder body (10) comprises a housing part (14) convexly disposed on an outer lateral side thereof; the housing part (14) comprises a flow channel (141) passing therethrough, and the flow channel (141) is in communication with the first passage (34) and the third passage (41).

7. The power cylinder with embedded solenoid valve of claim 1, wherein a plurality of grooves (521) are concavely disposed on an outer periphery of the valve stem (52) at intervals; each of the grooves (521) is mounted with a seal ring (523).

8. The power cylinder with embedded solenoid valve of claim 7, wherein a plurality of through grooves (522) are concavely disposed on the outer periphery of the valve stem (52) at intervals; the grooves (521) are arranged on two sides of each of the through grooves (522) at intervals.

9. The power cylinder with embedded solenoid valve of claim 1, wherein one end of the two outlets (32) are connected with a silencer (36), respectively.

10. The power cylinder with embedded solenoid valve of claim 1, wherein the piston assembly (20) comprises a piston (21) and a shaft body (22); the piston (21) is arranged in adjacent to the first end (11) and connected with one end of the shaft body (22); another end of the shaft body (22) protrudes out of the second end (12).
